# EUROPEAN PATENT APPLICATION

(11) **EP 4 333 258 A1**
(43) Date of publication of application: **06.03.2024**
(21) Application number: 23809940.2
(22) Date of filing: 29.06.2023
(51) Int. Cl.: H02J 9/06

(54) **EXTENSIBLE SYSTEM ARCHITECTURE OF QUICK TRANSFER SWITCH**

(30) Priority: 30.06.2022 CN 202210771234
(71) Applicant: SCHNEIDER ELECTRIC INDUSTRIES SAS, 92500 Rueil-Malmaison (FR)
(72) Inventor: CHEN, Xiaohang, Shanghai 201203 (CN); ZHAO, Haijun, Shanghai 201203 (CN); SONG, Yangfeng, Shanghai 201203 (CN); CHEN, Jiamin, Shanghai 201203 (CN); DONG, Jihua, Shanghai 201203 (CN); YANG, Qing, Shanghai 201203 (CN)
(74) Representative: Manitz Finsterwald Patent- und Rechtsanwaltspartnerschaft mbB
(86) International application number: PCT/CN2023/103932
(87) International publication number: WO 2024/002254

(57) **Abstract**

A system architecture of a fast transfer switch is provided, which includes a main power loop configured to be connected to at least two power supplies, transfer between the at least two power supplies, and output an AC signal; a first parallel bypass module configured to output an AC signal, the first parallel bypass module including an independent power supply; the main controller is configured to, in response to detecting the abnormality of the first power supply of the at least two power supplies, adjust the AC signal output by the first parallel bypass module during the transfer of the main power loop between the at least two power supplies, so as to transfer from the first power supply outputting the AC signal via the main power loop to the second power supply of the at least two power supplies outputting the AC signal via the main power loop.

## Description

This application claims priority of the Chinese Patent Application No. 202210771234.0 filed on June 30, 2022, the content disclosed in which is incorporated herein by reference in their entities.

### TECHNICAL FIELD

The invention relates to the field of power supply transfer, in particular to an extendable system architecture of instant transfer switch.

### BACKGROUND

At present, the dual power supply transfer schemes without interruption at load are automatic transfer switch (ATS) and uninterruptible power supply (UPS). ATS is a simple mechanical structure, which is limited by the inherent shortcomings of the mechanical structure. The traditional switching time of ATS is often longer than 100ms. For some devices that are sensitive to power-off time, this interruption time is often unacceptable. Therefore, for such loads, ATS cannot independently complete the power switching work, and often needs to cooperate with UPS to meet the demand of loads for uninterrupted power supply. Specifically, ATS is connected to two power supplies to switch between the two power supplies, and during the switching, it cooperates with UPS to maintain the load power supply in the short-time power-off process.

### SUMMARY

### One of the Technical Problems

The existing mechanical ATS has a long transfer time, which can not meet the demands of occasions that require high continuity of system power supply, such as stadium lighting, medical equipment, data centers, electronic workshops and so on. Although the existing ATS plus on-line UPS system can provide continuity of system power supply, its disadvantages are as follows: batteries or super capacitors must be used and the maintenance cost is high; rectifier and inverter circuit is used to supply power to load for a long time, power supply efficiency is low, which is not conducive to reducing carbon emissions and achieving the goal of double carbon as soon as possible; large size, which is not suitable for building applications.

### One of the Solution to the Problem

According to one aspect of the present disclosure, a system architecture of a fast transfer switch is provided, which comprises a main power loop configured to be connected to at least two power supplies, transfer between the at least two power supplies, and output an AC signal; a first parallel bypass module configured to output an AC signal, the first parallel bypass module including an independent power supply; the main controller is configured to, in response to detecting the abnormality of the first power supply of the at least two power supplies, adjust the AC signal output by the first parallel bypass module during the transfer of the main power loop between the at least two power supplies, so as to transfer from the first power supply outputting the AC signal via the main power loop to the second power supply of the at least two power supplies outputting the AC signal via the main power loop.

### The Beneficial Effects of Disclosure

Compared with the existing architectures of ATS and UPS, the system architecture of the extendable fast transfer switch of this invention can realize zero power loss of the load, seamless switching (the load voltage will not have transient change of amplitude and phase), and ATS arcing will not affect the system architecture of the extendable fast transfer switch. In addition, the present disclosure can extend the system architecture for different system rated currents and functions.

### BRIEF DESCRIPTION OF DRAWINGS

The above and other aspects, features and advantages of specific embodiments of the present disclosure will become more apparent from the following description taken in conjunction with the accompanying drawings, in which:
Fig. 1 is a schematic circuit diagram of a fast transfer switching system according to an embodiment of the present disclosure;
Fig. 2 is an extended topology diagram of a fast transfer switching system according to an embodiment of the present disclosure;
Fig. 3 is an extended topology diagram of a fast transfer switch system using a parallel bypass module with charging management;
Fig. 4 is another extended topology diagram of the fast transfer switch system using parallel bypass module with charging management;
Fig. 5 is another extended topology diagram of the fast transfer switch system using parallel bypass module with charging management.

### DETAILED DESCRIPTION

Before proceeding to the following detailed description, it may be beneficial to set forth the definitions of certain words and phrases used throughout this patent application document. The terms "including" and "containing" and their derivatives refer to including but not limited to. The term "or" is inclusive, meaning and/or. The phrase "associated with" and its derivatives refer to including, included in, interconnected with, contained in, connected with, coupled with, communicated with, cooperated with, interlaced with, juxtaposed with, approached with, bound with, having, having properties, having relations with, etc. The term "controller" refers to any device, system or part thereof that controls at least one operation. Such a controller may be implemented in hardware or a combination of hardware and software and/or firmware. The functions associated with any particular controller can be centralized or distributed, whether local or remote. The phrase "at least one", when used with a list of items, means that different combinations of one or more of the listed items can be used, and only one item in the list may be needed. For example, "at least one of a, b and c" includes any one of the following combinations: a, b, c, a and b, a and c, b and c, a and b and c.

Definitions of other specific words and phrases are provided throughout this patent application document. It should be understood by those skilled in the art that in many cases, if not most cases, this definition also applies to the previous and future uses of words and phrases so defined.

In this patent application document, the application combination of transform blocks and the division hierarchy of sub-transform blocks are only used for illustration, and the application combination of transform blocks and the division hierarchy of sub-transform blocks can have different ways within the scope of this disclosure.

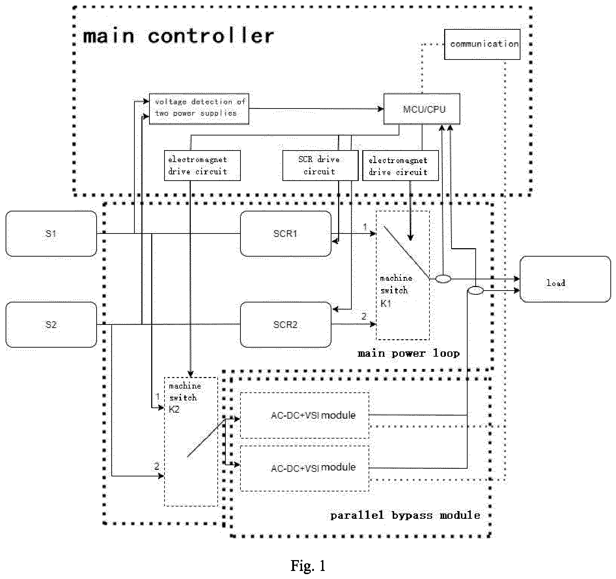

Figs. 1 to 5 discussed below and various embodiments for describing the principles of the present disclosure in this patent application document are for illustration only and should not be construed as limiting the scope of the present disclosure in any way. Those skilled in the art will understand that the principles of the present disclosure can be implemented in any suitably arranged system or device.

Fig. 1 is a schematic circuit diagram of a fast transfer switch system according to an embodiment of the present disclosure.

As shown in Fig. 1, the fast transfer switching system at least includes a main controller, a main power loop and one or more parallel bypass modules.

The main power loop includes one or more power electronic devices (for example, thyristors SCR1 and SCR2 shown in Fig. 1) and one or more mechanical switches (for example, mechanical switch K1 shown in Fig. 1). Thyristors SCR1 and SCR2 are used to switch the current of the main power loop. The mechanical switch K1 is used for isolation. The main power loop may also include one or more mechanical switches K2 for selecting power supply from the parallel bypass module. The main power loop can be connected to at least two power supply, such as S1 and S2 shown in Fig. 1.

One or more parallel bypass modules include inverter circuits (for example, VSI modules shown in Fig. 1) and DC devices (for example, AC-DC rectifiers shown in Fig. 1). The DC device is used to output DC signals to the inverter circuit, and the inverter circuit is used to output AC signals to the load. Each parallel bypass module supports a certain output power, and a larger output power can be achieved by connecting a plurality of modules in parallel (for example, two combinations of the AC-DC rectifier and the VSI module in Fig. 1 are connected in parallel). Each parallel bypass module can receive the control instruction sent from the main controller to switch the working mode, and can report the status to the main controller to synchronize real-time data (such as parameters such as phase and amplitude of output signal) with the main controller through communication. The parallel bypass module can supply power to the load in the bypass mode according to the working mode required by the control instruction. There are many types of parallel bypass modules, such as isolated/non-isolated, with energy storage devices (such as batteries, supercapacitors, etc.) and charging management/without energy storage device management, with/without AC->DC rectifier.

The main controller includes a power supply abnormality detection circuit (for example, the voltage detection circuit of power supply circuit shown in Fig. 1), a power electronic device drive control circuit (for example, the SCR drive circuit shown in Fig. 1), a mechanical switch drive control circuit (for example, the electromagnet drive control circuit or relay shown in Fig. 1), and a communication circuit. The main controller can control the main power loop and the parallel bypass module. The main controller can control the parallel bypass module through the communication bus and synchronize the real-time data; can identify the type of parallel bypass module and perform the module state management according to the type. The voltage detection circuit of the power supply circuit in Fig. 1 can detect two or more power supplies and identify abnormal power supplies (for example, overvoltage, undervoltage, over frequency, under frequency, voltage sag, etc.).

When the fast transfer switching system is in the normal working mode, the main power loop uses one power supply (S1 in Fig. 1) as the main power supply for supplying power to the load. At the same time, the parallel bypass module is powered by the standby power supply S2 and is in a waiting state.

When the fast transfer switch system detects that the main power supply S1 is abnormal, it can start the parallel bypass module and enter the parallel bypass mode. In parallel bypass mode, while SCR1 is gradually turned off, the amplitude and phase of the AC signal output by the parallel bypass module can be adjusted to follow and synchronize with the amplitude and phase of the main power supply S1, so that the system can gradually switch from the being powered by main power supply S1 to the being powered by parallel bypass module. After SCR1 is turned off, switch K1 from contact 1 to contact 2, during K1 is switched from contact 1 to contact 2, the amplitude and phase of the AC signal output by the parallel bypass module can be adjusted to follow and synchronize with the amplitude and phase of the standby power supply S2. When K1 is switched to contact 2, SCR2 is turned on, and the output of parallel bypass module can be turned off, so that the system can be switched from parallel bypass module to standby power supply S2. Finally, switch K2 from contact 2 to contact 1. Through the above steps, it is ensured that the main power supply S1 can be seamlessly switched to the parallel bypass module, and then the parallel bypass module can be seamlessly switched to the standby power supply S2. When the standby power supply S2 is abnormal, it can also be switched back to the main power supply S1 in the same way. It should be understood that the above operations need not be performed in the exact order described. On the contrary, steps can be processed in a different order or at the same time, and steps can also be added or omitted.

Because the thyristor SCR1 has no contact, when it is adjusted to be turned on and off, there will be no arcing phenomenon caused by the voltage between the contacts breaking through the air layer, and the parallel bypass mode does not need to support long-term operation.

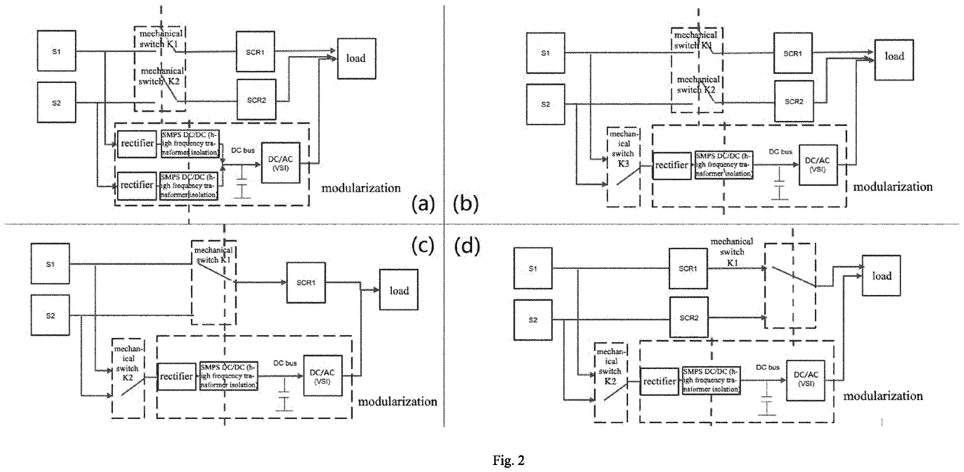

Fig. 2 is an extended topology diagram of a fast transfer switch system according to an embodiment of the present disclosure. The main controller (not shown) of each extended topology diagram in Fig. 2 is the same as that in Fig. 1, and the description will not be repeated.

As shown in Fig. 2(a), the fast transfer switching system includes two thyristors SCR1 and SCR2, two mechanical switches K1 and K2, two rectifiers, two SMPS DC/DC (high frequency transformer isolation), an inverter VSI, and a capacitor.

The mechanical switches K1 and K2 of Fig. 2(a) correspond to the mechanical switch K1 of Fig. 1. That is, the mechanical switch K1 of Fig. 1 is split into mechanical switches K1 and K2 of Fig. 2(a). When the mechanical switch K1 in Figure 2(a) is turned on and K2 is turned off, it is equivalent to that K1 in Fig. 1 is turned to contact 1; When the mechanical switch K1 in Fig. 2(a) is turned off and K2 is turned on, it is equivalent to that K1 in Fig. 1 is turned to contact 2. The parallel bypass module in Fig. 2(a) is not connected with a mechanical switch (i.e., the mechanical switch K2 in Fig. 1 is omitted), and two combinations of rectifier and SMPS DC/DC are connected to two power supplies S1 and S2 respectively, and the isolation is realized by SMPS. One end of the capacitor is connected between the SMPS DC/DC and the inverter, and the other end of the capacitor is grounded, the capacitor at least plays a filtering role.

As shown in Fig. 2(b), the fast transfer switching system includes two thyristors SCR1 and SCR2, three mechanical switches K1-K3, one rectifier, one SMPS DC/DC, one inverter VSI, and one capacitor.

The mechanical switches K1 and K2 of Fig. 2(b) operate in the same way as those of Fig. 2(a). The mechanical switch K3 of Fig. 2(a) operates in the same way as the mechanical switch K2 of Fig. 1. The functions of SMPS DC/DC and capacitor are the same as those in Figure 2(a).

As shown in Fig. 2(c), the fast transfer switching system includes one thyristor SCR1, two mechanical switches K1 and K2, one rectifier, one SMPS DC/DC (high frequency voltage isolation), one inverter VSI, and one capacitor.

The mechanical switches K1 and K2 of Fig. 2(c) operate in the same way as the mechanical switches K1 and K2 of Fig. 1. SCR1 in Fig. 2(c) corresponds to SCR1 and SCR2 in Fig. 1. That is, SCR1 and SCR2 of Fig. 1 are merged into SCR1 of Fig. 2(c). SCR1 in Fig. 2(c) plays the same role as SCR1 and SCR2 in Fig. 1 by cooperating with mechanical switch K1. The functions of SMPS DC/DC and capacitor are the same as those in Figure 2(a).

As shown in Fig. 2(d), the fast transfer switching system includes two thyristors SCR1 and SCR2, two mechanical switches K1 and K2, one rectifier, one SMPS DC/DC (high frequency voltage isolation), one inverter VSI, and one capacitor.

The difference of Fig. 2(d) compared with Fig. 1 is that SMPS DC/DC and capacitor are added, and there are no multiple combinations of AC-DC rectifiers and inverter VSI connected in parallel, and the rest parts are the same. The functions of SMPS DC/DC and capacitor are the same as those in Figure 2(a).

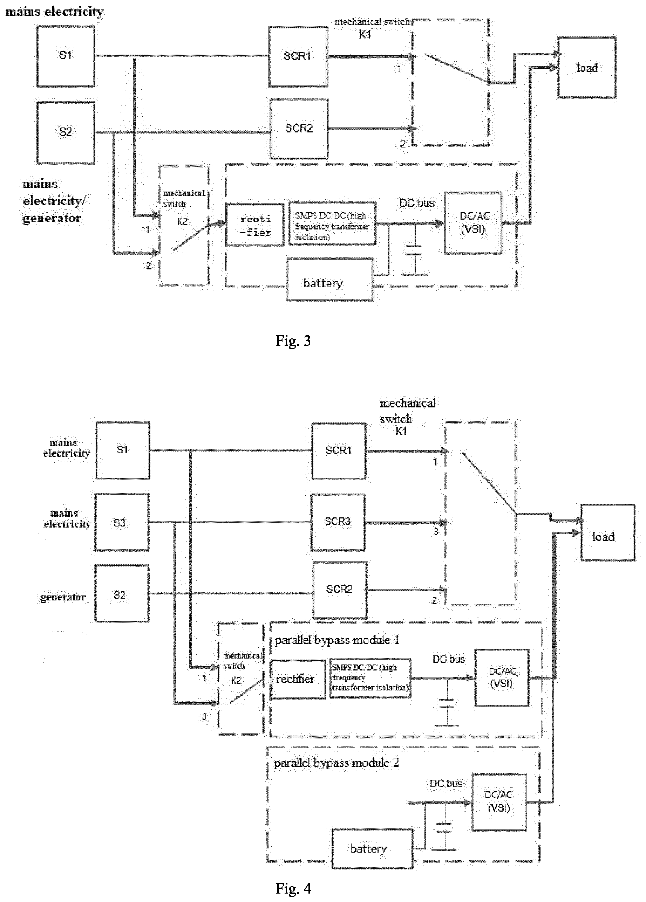

Figs. 3- 5 are system architecture extensions of the fast transfer switch system of Fig. 1 for different system rated currents and system functions.

Fig. 3 is an extended topology diagram of a fast transfer switch system using a parallel bypass module with charging management.

As shown in Fig. 3, when the fast transfer switching system is in the normal operation mode, the main power loop uses the power supply S1 of Fig. 3 (for example, an online power supply such as a commercial power supply) as the main power supply for supplying power to the load. At the same time, the parallel bypass module is in a waiting state. An energy storage device (e.g., a battery in Fig. 3) of the parallel bypass module may be charged via a rectifier or reversely charged via an inverter VSI.

When the fast transfer switch system detects that the main power supply S1 is abnormal, it can start the parallel bypass module and enter the parallel bypass mode. The parallel bypass module of Fig. 3 includes an independent power supply. Independent power sources include DC devices (for example, the rectifier and energy storage devices such as batteries in Fig. 3) and VSI inverters. In parallel bypass mode, while SCR1 is gradually turned off, the amplitude and phase of AC signal output via VSI inverter powered by battery can be adjusted to follow and synchronize with the amplitude and phase of main power supply S1, so that the system can gradually switch from main power supply S1 to parallel bypass module. And after detecting that the main power supply S1 is abnormal, quickly start the generator as a standby power supply. After SCR1 is turned off, K1 is switched from contact 1 to contact 2, during K1 is switched from contact 1 to contact 2, the amplitude and phase of AC signal output via VSI inverter powered by battery can be adjusted to follow and synchronize with the amplitude and phase of generator standby power S2. When K1 is switched to contact 2, SCR2 is turned on, and the output of parallel bypass module can be turned off, so that the system can be switched from parallel bypass module to standby power supply S2. Through the above steps, it is ensured that the main power supply S1 can be seamlessly switched to the parallel bypass module, and then the parallel bypass module can be seamlessly switched to the standby power supply S2. The standby power supply S2 may be mains electricity or a generator. It should be understood that the above operations need not be performed in the exact order described. On the contrary, steps can be processed in a different order or at the same time, and steps can also be added or omitted. As shown in Fig. 3, the parallel bypass module with charging management also includes mechanical switch K2, rectifier and SMPS DC/DC. In the case of power supply from the main power loop, power can also be supplied through the rectifier and VSI inverter at the same time, which can improve the power quality of power supply for the load (such as harmonic control, etc.), but this is not necessary.

Fig. 4 is another extended topology diagram of the fast transfer switch system using parallel bypass module with charging management.

As shown in Fig. 4, when the fast transfer switching system is in the normal operation mode, the main power loop uses a power supply S1 (for example, an online power supply such as a mains supply) as a main power supply for supplying power to a load. At the same time, parallel bypass module 1 and parallel bypass module 2 are in a waiting state.

When the fast switching system detects that the main power supply S1 is abnormal, it can start the parallel bypass module 2 and enter the parallel bypass mode. In the parallel bypass mode, while the SCR1 is turned off gradually, the amplitude and phase of the AC signal output by the parallel bypass module 2 may be adjusted to follow and synchronize with the amplitude and phase of the main power supply S1, so that the system may gradually switch from the main power supply S1 to the parallel bypass module 2. After SCR1 is turned off, switch K1 from contact 1 to contact 3, during K1 is switched from contact 1 to contact 3, the amplitude and phase of the AC signal output by the parallel bypass module 2 can be adjusted to follow and synchronize with the amplitude and phase of standby power supply S3. When K1 is switched to contact 3, SCR3 is turned on, and the output of parallel bypass module 2 may be turned off, so that the system is switched from parallel bypass module to standby power supply S2. Finally, K2 is switched from contact 3 to contact 1. Through the above steps, it is ensured that the main power supply S1 can be seamlessly switched to the parallel bypass module 2, and then seamlessly switched from the parallel bypass module 2 to the standby power supply S3. When the standby power supply S3 is abnormal, it can also be switched back to the main power supply S1 in the same way. It should be understood that the above operations need not be performed in the exact order described. On the contrary, steps can be processed in a different order or at the same time, and steps can also be added or omitted.

When the fast transfer switching system detects that both the main power supply S1 and the standby power supply S3 are abnormal (for example, after the main power supply S1 is abnormal, the standby power supply S3 is abnormal), the parallel bypass module 1 can be started to enter the parallel bypass mode. The parallel bypass module 1 of Fig. 4 includes an independent power supply. Independent power sources include DC devices (energy storage devices such as batteries in Fig. 4) and VSI inverters. In the parallel bypass mode, while the SCR3 is turned off gradually, the amplitude and phase of the AC signal output through the VSI inverter powered by the battery may be adjusted to follow and synchronize with the amplitude and phase of the standby power supply S3, so that the system can gradually switch from the standby power supply S3 to the parallel bypass module 1. After detecting that both the main power supply S1 and the standby power supply S3 are abnormal, the generator which is the standby power supply 2 is quickly started. After SCR3 is turned off, K1 is switched from contact 3 to contact 2, during K1 is switched from contact 3 to contact 2, the amplitude and phase of AC signal output via VSI inverter powered by battery may be adjusted to follow and synchronize with the amplitude and phase of generator standby power S3. When K1 is switched to contact 3, SCR2 is turned on, and the output of parallel bypass module may be turned off, so that the system is switched from parallel bypass module 1 to standby power supply S2. Through the above steps, it is ensured that the standby power supply S3 may be seamlessly switched to the parallel bypass module 1, and then the parallel bypass module 1 may be seamlessly switched to the standby power supply S2. The standby power supply S2 may be mains electricity or a generator. It should be understood that the above operations need not be performed in the exact order described. On the contrary, steps can be processed in a different order or at the same time, and steps can also be added or omitted.

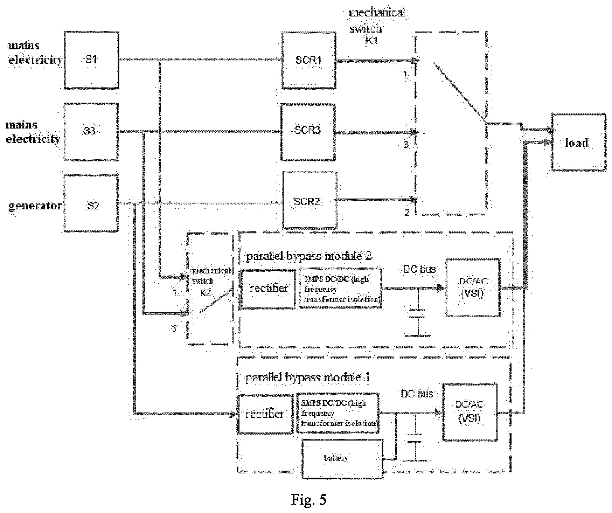

Fig. 5 is another extended topology diagram of the fast transfer switch system using parallel bypass module with charging management.

Compared with Fig. 4, Fig. 5 is different in that the independent power supply of the parallel bypass module 1 of Fig. 5 also includes a rectifier, and the parallel bypass module 1 also includes SMPS DC/DC. In the case of power supply from the main power loop, power can also be supplied through the rectifier and VSI inverter at the same time, which can improve the power quality of power supply for the load (such as harmonic control, etc.), but this is not necessary.

Through Fig. 3- Fig. 5, the system architecture of the fast transfer switch system of Fig. 1 can be extended for different rated current and functions of the system. The quick transfer switch system of this disclosure is more flexible and can be applied to scenes with different reliability level requirements, but the disclosure is not limited to this.

The text and drawings are provided as examples only to help understand the present disclosure. They should not be construed as limiting the scope of the present disclosure in any way. Although certain embodiments and examples have been provided, based on the disclosure herein, it is clear to those skilled in the art that changes can be made to the illustrated embodiments and examples without departing from the scope of this disclosure.

Although the present disclosure has been described with exemplary embodiments, various changes and modifications can be suggested to those skilled in the art. This disclosure is intended to cover such changes and modifications as fall within the scope of the appended claims.

Any description in the present invention should not be understood as implying that any particular element, step or function is an essential element that must be included within the scope of the claims. The scope of the patent subject matter is limited only by the claims.

## Claims

1. A system of a fast transfer switch, comprising:
a main power loop configured to be connected to at least two power supplies, transfer between the at least two power supplies, and output an alternating current signal;
a first parallel bypass module configured to output an alternating current signal, the first parallel bypass module including an independent power supply;
the main controller is configured to, in response to detecting the abnormality of a first power supply of the at least two power supplies, adjust the alternating current signal output by the first parallel bypass module during the transfer of the main power loop between the at least two power supplies, so as to transfer from the first power supply outputting the alternating current signal via the main power loop to a second power supply of the at least two power supplies outputting the alternating current signal via the main power loop.

2. The system of claim 1, wherein the transferring from the first power supply outputting the alternating current signal via the main power loop to the second power supply of the at least two power supplies outputting the alternating current signal via the main power loop:
transferring from the first power supply outputting the alternating current signal via the main power loop to the independent power supply outputting the AC signal via the first parallel bypass module,
then transferring from the independent power supply outputting the alternating current signal via the first parallel bypass module to the second power supply outputting the alternating current signal via the main power loop.

3. The system of claim 2, wherein the adjusting the alternating current signal output by the first parallel bypass module during the transfer of the main power loop between the at least two power supplies comprises:
during transferring from the first power supply outputting the alternating current signal via the main power loop to the independent power supply outputting the alternating current signal via the first parallel bypass module, causing the alternating current signal output by the independent power supply via the first parallel bypass module to follow the amplitude and phase of the first power supply and to be synchronized with the amplitude and phase of the first power supply,
upon transferring from the independent power supply outputting the alternating current signal via the first parallel bypass module to the second power supply outputting the alternating current signal via the main power loop, causing the alternating current signal output from the independent power supply via the first parallel bypass module to follow the amplitude and phase of the second power supply and to be synchronized with the amplitude and phase of the second power supply.

4. The system of claim 1, wherein the independent power supply of the first parallel bypass module comprises an energy storage device and an inverter,
wherein the energy storage device is configured to output a direct current signal to the inverter, and
wherein the inverter is configured to output an alternating current signal.

5. The system of claim 1 or 4, further comprising a second parallel bypass module comprising a rectifier and an inverter,
wherein the rectifier is configured to receive an alternating current signal from one of the at least two power supplies and output a direct current signal to the inverter, and
wherein the inverter is configured to output an alternating current signal.

6. The system of claim 4, wherein the first parallel bypass module further comprises a rectifier, wherein the rectifier is configured to receive an alternating current signal from one of the at least two power supplies and output a direct current signal to the inverter and/or the energy storage device.

7. The system of claim 5, wherein the at least two power supplies connected further comprise a third power supply,
wherein transferring between the first power supply or the third power supply outputting the alternating current signal and the second power supply outputting the alternating current signal is performed by the first parallel bypass module, and
wherein, transferring between the first power supply outputting the alternating current signal and the third power supply outputting the alternating current signal is performed by the second parallel bypass module.

8. The system of claim 7, wherein the first power supply and the third power supply are online power supplies, the second power supply is a generator, and the main controller is further configured to start the generator as the second power supply in response to detecting that both the first power supply and the third power supply of the at least two power supplies are abnormal.

9. The system of claim 5 or 6, wherein there is high frequency transformer isolation (SMPS DC/DC) between the rectifier and the inverter.

10. The system of claim 9, wherein one end of a capacitor is connected between the high frequency transformer isolation (SMPS DC/DC) and the inverter, and the other end of the capacitor is grounded.

11. The system of claim 4, wherein the energy storage device comprises a battery or a supercapacitor.

12. A method for operating the system of claims 1-11.
